(19)

Europäisches Patentamt
European Patent Office
Office européen des brevets

(11) **EP 4 075 377 A1**

(12) **EUROPEAN PATENT APPLICATION**
published in accordance with Art. 153(4) EPC

(43) Date of publication:
**19.10.2022 Bulletin 2022/42**

(21) Application number: **19955580.6**

(22) Date of filing: **11.12.2019**

(51) International Patent Classification (IPC):
**G06T 7/00** (2017.01)

(52) Cooperative Patent Classification (CPC):
**G06T 7/00**

(86) International application number:
**PCT/JP2019/048515**

(87) International publication number:
**WO 2021/117165 (17.06.2021 Gazette 2021/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **MURAKAMI, Ryo**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **GENERATION METHOD, GENERATION PROGRAM, AND INFORMATION PROCESSING SYSTEM**

(57)    A method including: obtaining three-dimensional (3D) point group by using a measurement result of a 3D sensor; evaluating an influence of noise on the measurement result by using a result obtained by applying a cylinder model expressing each part of a human body to the 3D point group for each part; repeatedly executing a process in which a point group in a cylinder model periphery corresponding to a part in which the influence of noise is determined to be equal to or higher than a threshold is excluded from the 3D point group and the cylinder model is applied again to the 3D point group from which the point group is excluded; and generating a skeleton recognition result by using a result obtained by applying the cylinder model to the 3D point group of a case where the influence of noise on each part is lower than the threshold.

FIG. 1

**Description**

FIELD

The present invention relates to a generation method and the like.

BACKGROUND

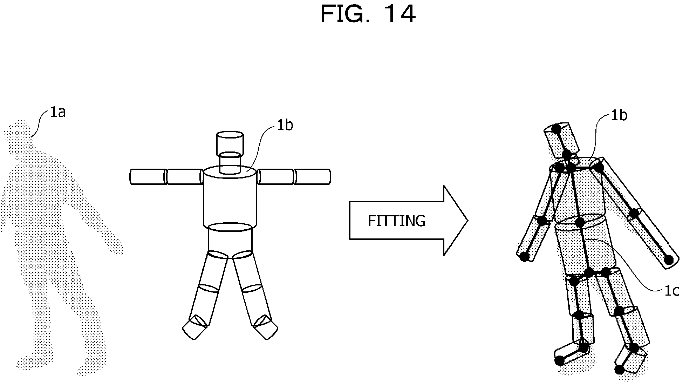

Scoring support for sports, various types of training support, and the like have been provided by performing skeleton recognition on measurement results of a subject sensed by a sensor and displaying a three-dimensional (3D) model obtained from each joint position. The skeleton recognition is for determining each joint position of the subject.
There is a fitting process as one of methods of the skeleton recognition. FIG. 14 is a diagram for explaining the fitting process. As illustrated in FIG. 14, in the fitting process, a cylindrical model data 1b obtained by modeling a body shape of the subject is applied to point group data 1a obtained from a measurement result of a depth sensor. For example, a skeleton model 1c is obtained by connecting an axis of each of cylinders of the cylindrical model data 1b, which is a result of the fitting process, and it is possible to estimate a position of each joint of the subject using the skeleton model 1c.

SUMMARY OF INVENTION

TECHNICAL PROBLEM

However, when the fitting process is carried out in a state where noise is included in the point group data, the cylindrical model data may be applied to a noise-derived point group instead of a subject-derived point group.

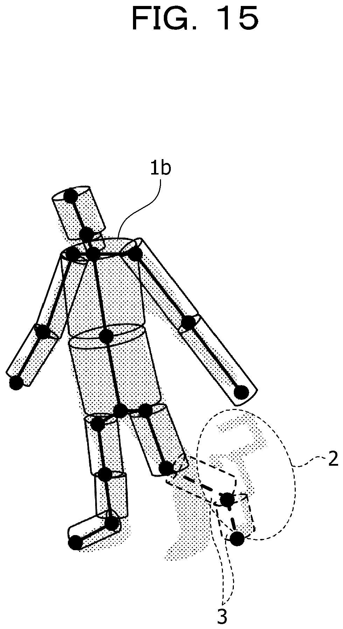

FIG. 15 is a diagram for explaining a problem of a conventional technique. In the example illustrated in FIG. 15, noise 2 is included in the point group data 1a. When the fitting process is carried out in a state where the noise 2 is included, a cylinder 3, which is a part of the cylindrical model data 1b, may be applied to the noise 2. For example, when a hill climbing method is used in the case of executing the fitting process, it is not allowed to reduce the likelihood in an intermediate process, whereby the cylinder 3 may be eventually applied to the side of the noise 2 once it is pulled to the side of the noise 2. In this manner, accuracy of a skeleton recognition result decreases when the cylinder 3 is applied to the noise 2.
In one aspect, it is an object of the present invention to provide a generation method, a generation program, and an information processing system capable of suppressing a decrease in accuracy of a skeleton recognition result derived from erroneous fitting caused by noise.

SOLUTION TO PROBLEM

In a first idea, a computer is caused to execute the following process. The computer obtains three-dimensional point group data on the basis of a measurement result of a 3D sensor that three-dimensionally measures a subject. On the basis of a result obtained by applying a cylinder model that expresses individual parts of a human body with a plurality of cylinders to the three-dimensional point group data, the computer evaluates an influence of noise on the measurement result for each of the parts. The computer repeatedly executes a process of excluding a point group in a cylinder model periphery corresponding to a part in which the influence of noise is determined to be equal to or higher than a predetermined level from the three-dimensional point group data and applying the cylinder model again to the three-dimensional point group data from which the point group is excluded. The computer generates a skeleton recognition result of the subject on the basis of a result obtained by applying the cylinder model to the three-dimensional point group data of a case where the influence of noise on each of the parts is lower than the predetermined level, and outputs the skeleton recognition result.

ADVANTAGEOUS EFFECTS OF INVENTION

It becomes possible to suppress a decrease in accuracy of the skeleton recognition result derived from erroneous fitting caused by noise.

BRIEF DESCRIPTION OF DRAWINGS

FIG. 1 is a diagram for explaining an exemplary process of an information processing system according to the present embodiment.

FIG. 2 is a diagram illustrating an example of the information processing system according to the present embodiment.

FIG. 3 is a functional block diagram illustrating a configuration of an information processing apparatus according to the present embodiment.

FIG. 4 is a diagram illustrating an exemplary data structure of cylindrical model data.

FIG. 5 is a diagram illustrating a correspondence relationship between a cylinder and part identification information.

FIG. 6 is a diagram illustrating an exemplary parameter of the cylinder.

FIG. 7 is a diagram for explaining a process of evaluating an influence of noise.

FIG. 8 is a diagram for explaining an exemplary process of a fitting processing unit.

FIG. 9 is a diagram illustrating exemplary screen information.

FIG. 10 is a flowchart illustrating a processing procedure of the information processing apparatus according to the present embodiment.

FIG. 11 is a flowchart illustrating a processing procedure of a noise evaluation process.

FIG. 12 is a flowchart illustrating a processing procedure of a fitting process.

FIG. 13 is a diagram illustrating an exemplary hardware configuration of a computer that implements functions similar to those of the information processing apparatus.

FIG. 14 is a diagram for explaining the fitting process.

FIG. 15 is a diagram for explaining a problem of a conventional technique.

DESCRIPTION OF EMBODIMENTS

Hereinafter, an embodiment of a generation method, a generation program, and an information processing system disclosed in the present application will be described in detail with reference to the drawings. Note that the embodiment does not limit the present invention.

[Embodiment]

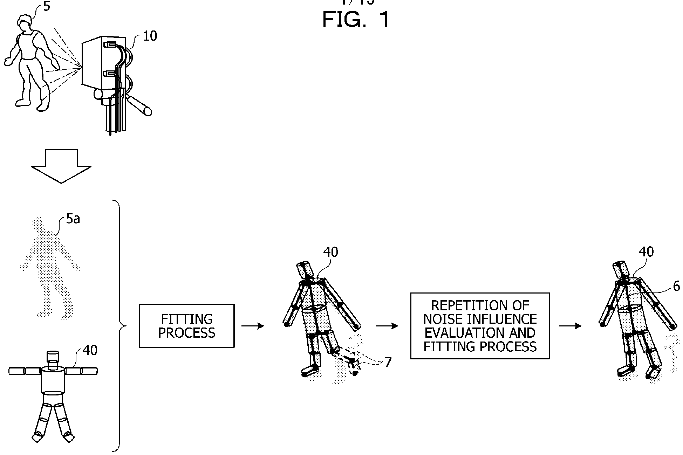

FIG. 1 is a diagram for explaining an exemplary process of an information processing system according to the present embodiment. The information processing system according to the present embodiment measures distance image data of a subject 5 using a sensor 10. The distance image data is data including individual distances between each point (pixel) on a surface of the subject 5 and the sensor 10. The distance image data is converted into three-dimensional point group data 5a by an information processing apparatus. The three-dimensional point group data 5a is data indicating three-dimensional coordinates of each point of the point group on the surface of the subject 5.

The information processing apparatus executes a fitting process for applying cylindrical model data 40 of the subject 5 to the three-dimensional point group data 5a. The cylindrical model data 40 is a model in which a length and thickness of each part of the subject 5 are approximated by radii and lengths of a plurality of cylinders.

The information processing apparatus evaluates an influence of noise on the basis of a result of the fitting process. For example, the process of evaluating the influence of noise is a process in which, for each cylinder of the cylindrical model data 40, the number of points included in a point group around the cylinder is counted and whether or not the number of counted points is less than expected (less than a predetermined number) is specified. The information processing apparatus determines that the influence of noise is equal to or higher than a certain level in a case where the number of points around any of the cylinders is less than expected. The predetermined number is a value set for each part. For example, the predetermined number is set on the basis of surface area and resolution of the cylinder of each part.

In the example illustrated in FIG. 1, in a cylinder 7 included in the cylindrical model data 40, the number of points around the cylinder 7 is less than expected, whereby the information processing apparatus determines that the influence of noise is equal to or higher than the certain level. In a case where the information processing apparatus evaluates that the influence of noise is equal to or higher than the certain level, it excludes the point group around the cylinder to be subject to the influence of noise, and executes the fitting process again. In the example illustrated in FIG. 1, the information processing apparatus excludes the point group around the cylinder 7, and executes the fitting process again.

The information processing apparatus repeatedly executes the fitting process by excluding the point group around the cylinder to be subject to the influence of noise until the influence of noise becomes lower than the certain level, and specifies a posture of the final cylindrical model data 40. Then, the information processing apparatus specifies skeleton model data 6 based on the posture of the final cylindrical model data 40. The skeleton model data 6 corresponds to a skeleton recognition result of the subject 5.

Here, a relationship between the number of points around the cylinder and the influence of noise will be described. While there are various types of noise caused by various causes, for example, edge noise will be considered. The edge noise is noise that occurs when points originally expected to be observed at contour positions of the subject are observed at positions away from the point group corresponding to the subject on the opposite side of the sensor in a fluttered manner as a result of laser light having grazed the subject contour. In the case of the subject having an irradiation area of equal to or more than a certain level, noise including the edge noise has density of the point group lower than density of the point group (subject-derived point group) corresponding to the observation result with the laser light emitted to the subject. Accordingly, if it is erroneously applied to the noise-derived point group as a result of the fitting process, the number of points around the cylinder is less than that of the case of being applied to the subject-derived point group. Therefore, in a case where the number of points around the cylinder is less than a predetermined number, it is possible to notice that erroneous fitting to the noise-derived point group has been carried out, and to carry out updating to three-dimensional point group data in which the influence of noise is reduced by removing the noise-derived point group. Moreover, it is possible to sequentially remove the noise-derived point groups according to the present embodiment by repeating the updating of the three-dimensional point group data and the fitting process using the updated three-dimensional point group data. Furthermore, according to the present embodiment, it is possible to ultimately suppress a decrease in accuracy of the skeleton recognition result derived from the erroneous fitting caused by noise while reducing the influence of noise by removing the noise-derived point group.

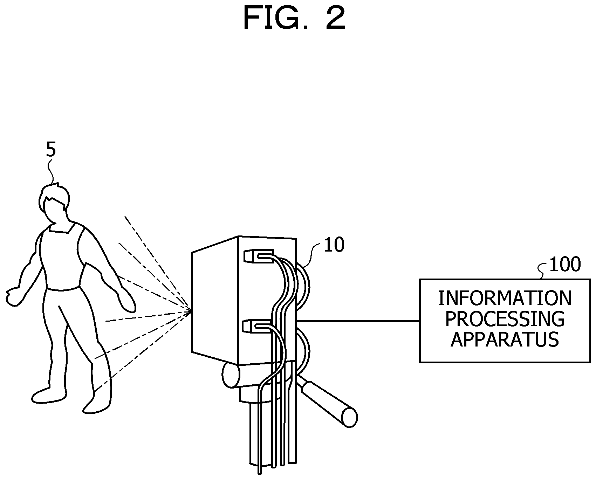

FIG. 2 is a diagram illustrating an example of the information processing system according to the present embodiment. As illustrated in FIG. 2, the information processing system includes the sensor 10 and an information processing apparatus 100. The sensor 10 is connected to the information processing apparatus 100 by wire or wirelessly.

The sensor 10 is a depth sensor that measures distance image data of the subject 5. The sensor 10 outputs the distance image data to the information processing apparatus 100 at predetermined frames per second (FPS).

As described with reference to FIG. 1, the information processing apparatus 100 repeatedly executes the fitting process by excluding the point group around the cylinder to be subject to the influence of noise until the influence of noise becomes lower than the certain level, and specifies skeleton model data from the result of the final fitting process.

Each time the information processing apparatus 100 obtains the distance image data from the sensor 10, it repeatedly executes a process of specifying the skeleton model data. The information processing apparatus 100 recognizes a motion of the subject 5 on the basis of the time-series skeleton model data. For example, an element included in a performance in a scoring competition is recognized as a motion, and screen information including a recognition result, a score of the performance, and the like is generated and displayed.

While descriptions will be given on the assumption that the subject 5 is a gymnast who performs a gymnastics routine in the present embodiment as an example, it is not limited to this, and is applicable to other scoring competitions. Other scoring competitions include trampoline, swim diving, figure skating, karate style, ballroom dance, snowboarding, skateboarding, ski aerial, and surfing. Furthermore, it may be applied to form check or the like of classical ballet, ski jump, mogul air and turn, baseball, and basketball. Furthermore, it may be applied to competitions such as kendo, judo, wrestling, and sumo. Moreover, it may also be used to evaluate whether or not a weight lifting barbell has been lifted.

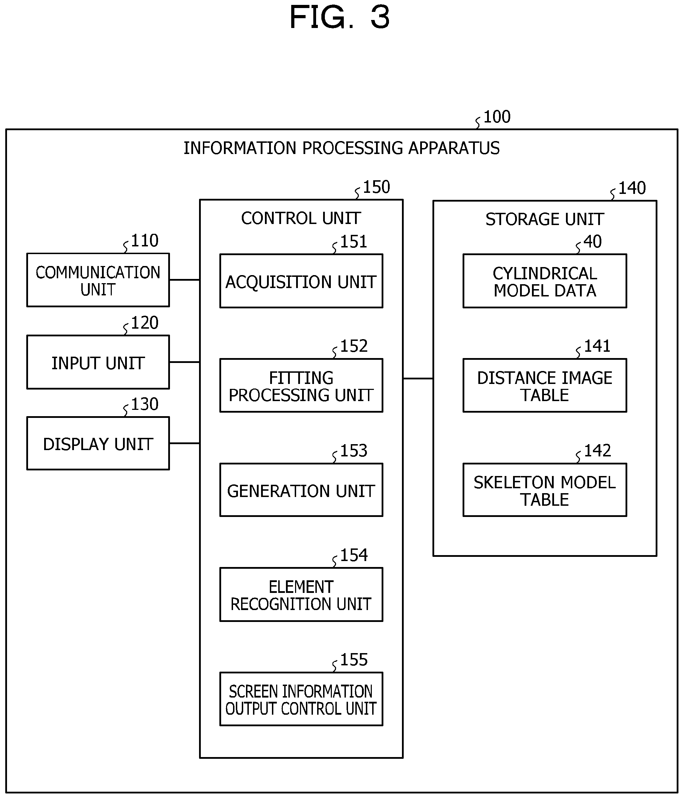

FIG. 3 is a functional block diagram illustrating a configuration of the information processing apparatus according to the present embodiment. As illustrated in FIG. 3, the information processing apparatus 100 includes a communication unit 110, an input unit 120, a display unit 130, a storage unit 140, and a control unit 150.

The communication unit 110 is a processing unit that performs data communication with an external device, such as the sensor 10, via a network. The control unit 150 to be described later exchanges data with an external device via the communication unit 110. The communication unit 110 is an exemplary communication device.

The input unit 120 is an input device that inputs various types of information to the control unit 150 of the information processing apparatus 100. The input unit 120 corresponds to a keyboard, a mouse, a touch panel, or the like. For example, a user operates the input unit 120 to request display of the screen information or the like.

The display unit 130 is a display device that displays information output from the control unit 150. For example, the display unit 130 displays screen information such as element approval and scoring results of various competitions. The display unit 130 corresponds to a liquid crystal display, an organic electro-luminescence (EL) display, a touch panel, or the like.

The storage unit 140 includes the cylindrical model data 40, a distance image table 141, and skeleton model table 142. The storage unit 140 corresponds to a semiconductor memory element such as a random access memory (RAM) or a flash memory, or a storage device such as a hard disk drive (HDD).

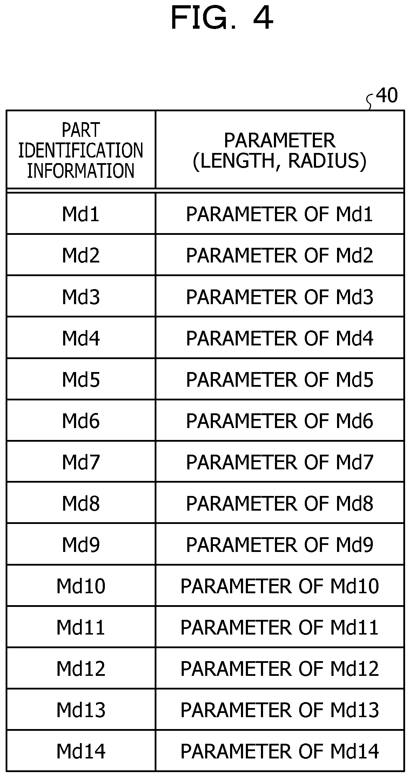

The cylindrical model data 40 is data of a model that expresses a part of a human body (subject) with a cylinder. FIG. 4 is a diagram illustrating an exemplary data structure of the cylindrical model data. As illustrated in FIG. 4, the cylindrical model data 40 associates part identification information with a parameter. The part identification information is information for identifying each cylinder included in a cylinder model. The parameter indicates a parameter of the cylinder identified by the part identification information. The parameter of the cylinder includes a length of the cylinder, a radius of the cylinder, or the like. Different cylindrical model data may be prepared for each subject to be measured.

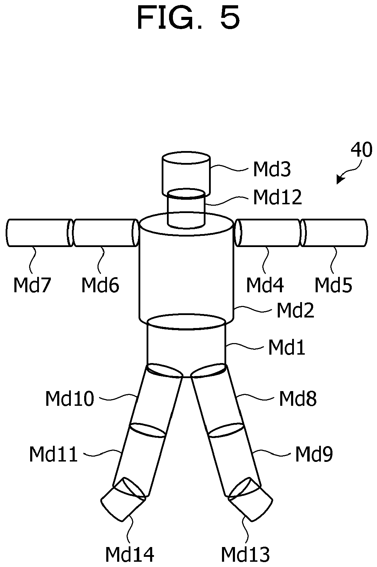

FIG. 5 is a diagram illustrating a correspondence relationship between a cylinder and part identification information. As illustrated in FIG. 5, respective pieces of part identification information Md1 to Md14 are associated with individual parts of the cylindrical model data 40, respectively. The pieces of part identification information Md1 to Md14 illustrated in FIG. 4 correspond to the pieces of part identification information Md1 to Md14 illustrated in FIG. 5, respectively.

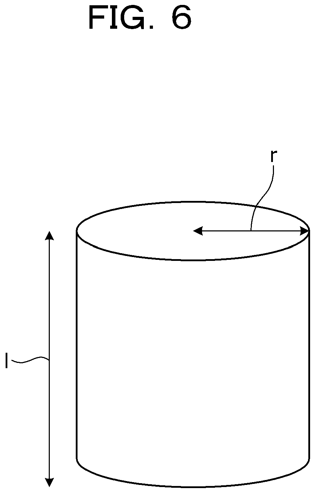

FIG. 6 is a diagram illustrating an exemplary parameter of the cylinder. FIG. 6 illustrates one of a plurality of cylinders Md1 to Md11. The parameter of the cylinder includes a height l of the cylinder and a radius r of the cylinder. The radius r of the cylinder corresponds to a thickness of the cylinder.

The description returns to FIG. 3. The distance image table 141 is a table that stores distance image data measured by the sensor 10 in time series.

The skeleton model table 142 is a table that stores the skeleton model data described with reference to FIG. 1 in time series.

The control unit 150 includes an acquisition unit 151, a fitting processing unit 152, a generation unit 153, and an element recognition unit 154. The control unit 150 is implemented by a central processing unit (CPU), a micro processing unit (MPU), hard-wired logic such as an application specific integrated circuit (ASIC) or a field programmable gate array (FPGA), or the like.

The acquisition unit 151 is a processing unit that obtains distance image data from the sensor 10. The acquisition unit 151 registers the distance image data from the sensor 10 in the distance image table 141.

The acquisition unit 151 converts the distance image data into three-dimensional point group data on the basis of a conversion table (not illustrated). The conversion table is a table that defines a relationship between a pixel position and distance of the distance image data and three-dimensional coordinates. The acquisition unit 151 outputs the three-dimensional point group data to the fitting processing unit 152.

The acquisition unit 151 repeatedly executes the process described above each time the distance image data is obtained from the sensor 10.

The fitting processing unit 152 evaluates an influence of noise on the three-dimensional point group data on the basis of a result of the fitting of the cylindrical model data 40. The fitting processing unit 152 repeatedly executes the process of excluding the point group around the cylindrical model data 40 from the three-dimensional point group data and applying the cylindrical model data 40 to the three-dimensional point group data from which the point group is excluded again until the influence of noise becomes lower than a certain level. The fitting processing unit 152 outputs, to the generation unit 153, final fitting result data when the influence of noise becomes lower than the certain level.

Here, the fitting processing unit 152 executes a process of specifying an initial value of a parameter, a process of calculating a parameter using an expectation maximization (EM) algorithm, and a process of evaluating an influence of noise. The "parameter" indicates each of joint angles connecting the individual cylinders of the cylindrical model data 40.

An example of the process in which the fitting processing unit 152 specifies the initial value of the parameter will be described. The fitting processing unit 152 uses the result of the fitting process for the (n - 1)-th three-dimensional point group data as an initial value of the parameter of the n-th three-dimensional point group data.

In a case where there is no result of the fitting process for the (n - 1)-th three-dimensional point group data, the fitting processing unit 152 executes the following process. The fitting processing unit 152 may match the barycenter of the cylindrical model data 40 with the barycenter of the three-dimensional point group data, calculate a degree of coincidence between the cylindrical model data 40 and the three-dimensional point group data for a plurality of predetermined parameters, and use the parameter with the highest degree of coincidence as an initial value.

Furthermore, the fitting processing unit 152 may input the three-dimensional point group data to a geometric model to calculate the initial value of the parameter. The method disclosed in International Publication Pamphlet No. WO 2018/207292 may be used as a method of calculating the initial value using the geometric model.

Subsequently, an example of the process in which the fitting processing unit 152 calculates the parameter using the EM algorithm will be described. The fitting processing unit 152 compares the cylindrical model data 40 in an initial posture with the three-dimensional point group data to calculate posterior distribution $p_{nm}$ of the point group. The cylindrical model data 40 in the initial posture is obtained by setting the initial value in the cylindrical model data 40.

The posterior distribution $p_{nm}$ is defined by the formula (1). The reference "n" included in the formula (1) indicates a point included in a point group frame, and n = 1 to $n_a$ when $n_a$ points are included in the point group frame. The reference M indicates each cylinder (part) of the cylindrical model data 40, and m = 1 to 14 (Md1 to Md14) in a case where there are 14 parts identified by the respective pieces of part identification information Md1 to Md14 as illustrated in FIG. 4.

[Formula 1]

$$P_{nm} = \frac{\exp\left(-\dfrac{\varepsilon_m\left(x_n,\sigma^2\right)}{2\sigma^2}\right)}{\sum_{m=1}^{M}\exp\left(-\dfrac{\varepsilon_m\left(x_n,\sigma^2\right)}{2\sigma^2}\right)} \qquad \cdots (1)$$

The reference $\varepsilon_m$ included in the formula (1) indicates a surface residual, and is assumed to be a Gaussian distribution. The surface residual indicates a difference in a vertical direction between a point group and a surface of an m-th cylinder. For example, a first cylinder indicates a cylinder with a part identification number Md1. The surface residual $\varepsilon_m$ is specified by $x_n$ and $\sigma^2$. The reference $x_n$ indicates three-dimensional coordinates of an n-th point. The reference $\sigma$ indicates variance of the three-dimensional coordinates of the point group included in the point group frame.

After calculating the posterior distribution $p_{nm}$, the fitting processing unit 152 updates an evaluation function Q defined by the formula (2). In the formula (2), the reference P indicates a total sum of $p_{nm}$.

[Formula 2]

$$Q\left(\theta,\sigma^2\right) = \frac{P}{2}\left[1 - \ln P + \ln\sum_{m=1}^{M}p_{nm}\varepsilon_m\left(x_n,\sigma^2\right)\right] \qquad \cdots (2)$$

The fitting processing unit 152 calculates a change amount $\Delta\theta$ of the cylindrical parameter that minimizes the likelihood of the evaluation function Q using the Levenberg-Marquardt (LM) method. For example, the fitting processing unit 152 calculates the change amount $\Delta\theta$ on the basis of the formulae (3) and (4). The fitting processing unit 152 may generate the change amount $\Delta\theta$ randomly, not limited to the LM method.

[Formula 3]

$$\left(J_\theta^T J_\theta + \lambda\,\mathrm{diag}\left(J_\theta^T J_\theta\right)\right)\Delta\theta = -J_\theta^T\varepsilon \qquad \cdots (3)$$

[Formula 4]

$$J_\theta = \frac{\partial\varepsilon_{nm}}{\partial\theta} \qquad \cdots (4)$$

The fitting processing unit 152 repeatedly executes the process of generating the change amount $\Delta\theta$, updating the parameter, and calculating the likelihood of the evaluation function Q until a predetermined convergence condition is satisfied. For example, in a case where the change amount $\Delta\theta$ is less than a predetermined change amount, the fitting processing unit 152 may determine that the convergence condition is satisfied when the likelihood of the evaluation function Q is less than a threshold value. The cylindrical model data 40 of the parameter (posture) that satisfies the convergence condition will be referred to as "cylindrical model data 40 of a fitting processing result".

Subsequently, an example of the process in which the fitting processing unit 152 evaluates the influence of noise will be described. The fitting processing unit 152 selects a part of the cylindrical model data 40 of the fitting processing result, and evaluates an influence of noise on the selected part.

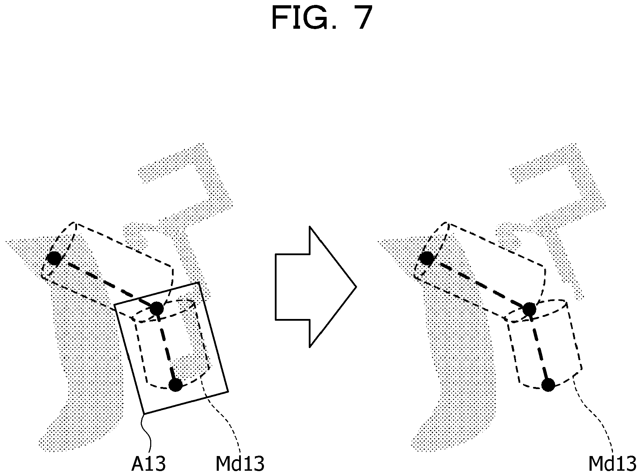

FIG. 7 is a diagram for explaining the process of evaluating the influence of noise. In FIG. 7, descriptions will be given using the cylinder with the part identification information "Md 13" as an example. The fitting processing unit 152 counts the number of points included in a point group in a cylinder periphery A13. Here, the cylinder periphery of a certain cylinder indicates a predetermined range from the surface of the cylinder. For example, the predetermined range indicates a range from the surface of the cylinder to r/10. The reference r indicates the radius of the cylinder. For example, the cylinder periphery A13 of the cylinder Md13 indicates a range from the surface of the cylinder Md13 to $r_{Md13}/10$. The reference $r_{Md13}$ indicates the radius of the cylinder Md13.

In a case where the number of counted points is less than a predetermined number, the fitting processing unit 152 determines that the influence of noise is equal to or higher than a certain level. In the case where the number of counted points is less than the predetermined number, the fitting processing unit 152 treats the point group around the cylinder as noise.

On the other hand, in a case where the number of counted points is equal to or more than the predetermined number, the fitting processing unit 152 determines that the influence of noise is lower than the certain level. In the case where the number of counted points is equal to or more than the predetermined number, the fitting processing unit 152 treats the point group around the cylinder as a point group derived from the subject 5.

In a case where the fitting processing unit 152 determines that the influence of noise is equal to or higher than the certain level, it excludes the point group included in the cylinder periphery A13. The fitting processing unit 152 also evaluates the influence of noise on parts other than the cylinder Md13, and excludes the point group around the cylinder in a case where the influence of noise is equal to or higher than the certain level. On the other hand, the fitting processing unit 152 does not exclude the point group from the periphery of the selected cylinder in a case where the influence of noise is lower than the certain level.

The fitting processing unit 152 updates the three-dimensional point group data to be subject to the fitting process by executing the process described above. The fitting processing unit 152 repeatedly perform the process of specifying the initial value, the process of calculating the parameter, and the process of evaluating the influence of noise on the updated three-dimensional point group data until the influence of noise becomes lower than the certain level for all parts.

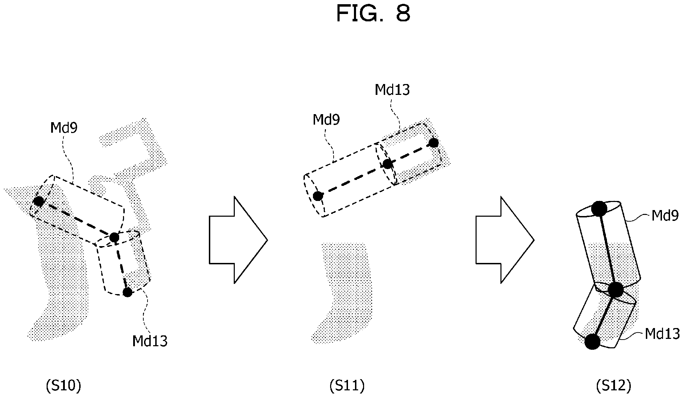

FIG. 8 is a diagram for explaining an exemplary process of the fitting processing unit. In FIG. 8, descriptions will be given using the cylinders with the part identification information "Md9 and Md13" as an example. The fitting processing unit 152 determines that the influence of noise on the cylinder Md9 is equal to or higher than a certain level, and excludes the point group around the cylinder of the cylinder Md9. The fitting processing unit 152 determines that the influence of noise on the cylinder Md13 is equal to or higher than the certain level, and excludes the point group around the cylinder of the cylinder Md13. As a result, the point groups around the cylinders of the cylinders Md9 and Md13 are excluded from the three-dimensional point group data (step S10).

In step S10, the fitting processing unit 152 performs a process of specifying an initial value and calculating a parameter on the three-dimensional point group data from which the point groups around the cylinders of the cylinders Md9 and Md13 are excluded, and obtains the cylindrical model data 40 of the fitting processing result. The fitting processing unit 152 determines that the influence of noise on the cylinder Md9 is equal to or higher than a certain level, and excludes the point group around the cylinder of the cylinder Md9. The fitting processing unit 152 determines that the influence of noise on the cylinder Md13 is equal to or higher than the certain level, and excludes the point group around the cylinder of the cylinder Md13. As a result, the point groups around the cylinders of the cylinders Md9 and Md13 are excluded from the three-dimensional point group data (step S11).

In step S11, the fitting processing unit 152 performs the process of specifying an initial value and calculating a parameter on the three-dimensional point group data from which the point groups around the cylinders of the cylinders Md9 and Md13 are excluded, and obtains the cylindrical model data 40 of the fitting processing result. The fitting processing unit 152 determines that the influence of noise on the cylinder Md9 is lower than the certain level. The fitting processing unit 152 determines that the influence of noise on the cylinder Md13 is lower than the certain level. As a result, the final parameter of the cylindrical model data 40 is specified (step S12).

The fitting processing unit 152 executes the process described above until the influence of noise on the fitting processing result previously executed becomes lower than the certain level, thereby specifying the final parameter of the cylindrical model data 40. The fitting processing unit 152 outputs the final parameter to the generation unit 153.

The description proceeds to FIG. 3. The generation unit 153 is a processing unit that generates skeleton model data on the basis of the final parameter of the cylindrical model data 40. The generation unit 153 sets the final parameter obtained from the fitting processing unit 152 to the cylindrical model data 40, thereby specifying a posture of the final cylindrical model data 40. The generation unit 153 specifies the skeleton model data in which the axes of the individual cylinders of the cylindrical model data 40 are connected. The skeleton model data specified by the generation unit 153 corresponds to the skeleton model data 6 described with reference to FIG. 1. The skeleton model data includes coordinates data of each joint. The generation unit 153 stores the skeleton model data in the skeleton model table 142.

The generation unit 153 repeatedly executes the process described above each time the final parameter is obtained from the fitting processing unit 152.

The element recognition unit 154 obtains each of the skeleton model data in the skeleton model table 142, and specifies a time-series change of each joint coordinates on the basis of successive skeleton model data. The element recognition unit 154 compares a time-series change of each joint position with an element recognition table (not illustrated) to specify a type of the element. Furthermore, the element recognition unit 154 compares a combination of element types with the element recognition table to calculate a score of the performance of the subject 5.

For example, the element recognition table is a table that associates a time-series change of each joint position included in individual skeleton recognition results with an element type. Furthermore, the element recognition table associates a combination of element types with a score. A score is calculated by adding a difficulty (D) score and an execution (E) score. For example, a D-score is a score calculated on the basis of success/unsuccess of an element. An E-score is a score calculated by a point-deduction system according to a perfection level of an element.

The element recognition unit 154 outputs, to a screen information output control unit 155, a type of an element included in a performance, a score of the performance, skeleton model data from the start to the end of the performance, and the like.

The screen information output control unit 155 generates screen information on the basis of the score of the performance and the skeleton model data from the start to the end of the performance. The screen information output control unit 155 outputs the generated screen information to the display unit 130, and causes it to be displayed.

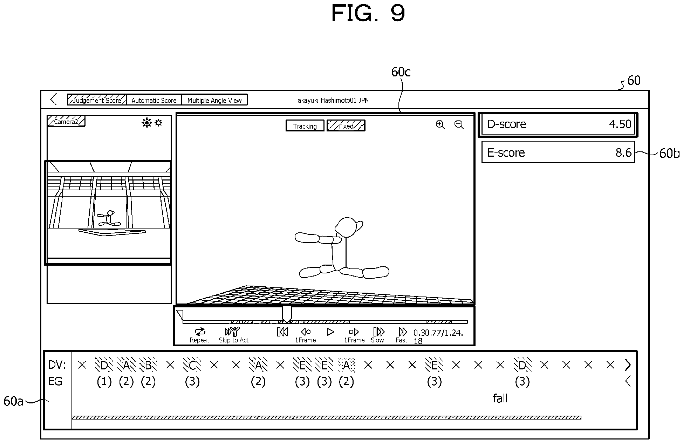

FIG. 9 is a diagram illustrating an example of the screen information. As illustrated in FIG. 9, this screen information 60 includes areas 60a, 60b, and 60c. The area 60a is an area for displaying a type of a recognized element in the performance performed by the subject 5. A difficulty level of the element may be displayed in addition to the type of the element. The area 60b is an area for displaying a score of the performance. The area 60c is an area for displaying an animation of a three-dimensional model based on the skeleton model data from the start to the end of the performance. A user operates the input unit 120 to instruct a playback, stop, or the like of the animation.

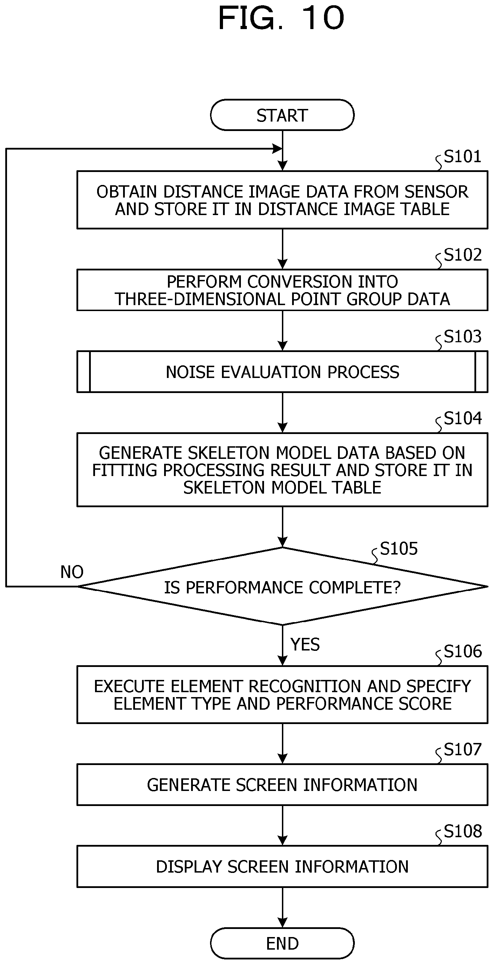

Next, an exemplary processing procedure of the information processing apparatus 100 according to the present embodiment will be described. FIG. 10 is a flowchart illustrating a processing procedure of the information processing apparatus according to the present embodiment. As illustrated in FIG. 10, the acquisition unit 151 of the information processing apparatus 100 obtains distance image data from the sensor 10, and stores it in the distance image table 141 (step S101). The acquisition unit 151 converts the distance image data into three-dimensional point group data (step S102).

The fitting processing unit 152 of the information processing apparatus 100 executes a noise evaluation process (step S103). The generation unit 153 of the information processing apparatus 100 generates skeleton model data on the basis of a result of a fitting process, and stores it in the skeleton model table 142 (step S104).

If the performance is not complete (No in step S105), the information processing apparatus 100 proceeds to step S101 again. On the other hand, if the performance is complete (Yes in step S105), the information processing apparatus 100 proceeds to step S106.

The element recognition unit 154 of the information processing apparatus 100 refers to the skeleton model table 142 to execute element recognition, and specifies an element type and a performance score (step S106). The screen information output control unit 155 of the information processing apparatus 100 generates screen information (step S107). The screen information output control unit 155 causes the display unit 130 to display the screen information (step S108). Note that, while the element recognition is carried out when the performance is complete in the present embodiment, it is not limited to this. For example, the information processing apparatus 100 sequentially carries out the skeleton recognition according to the output from the sensor. Then, the information processing apparatus 100 may sequentially carry out the element recognition using the skeleton recognition results in a collective unit among the skeleton recognition results sequentially carried out. Moreover, independently of the element recognition, the information processing apparatus 100 may generate a three-dimensional model animation based on the corresponding skeleton model data to display it on the screen each time the skeleton recognition result is obtained.

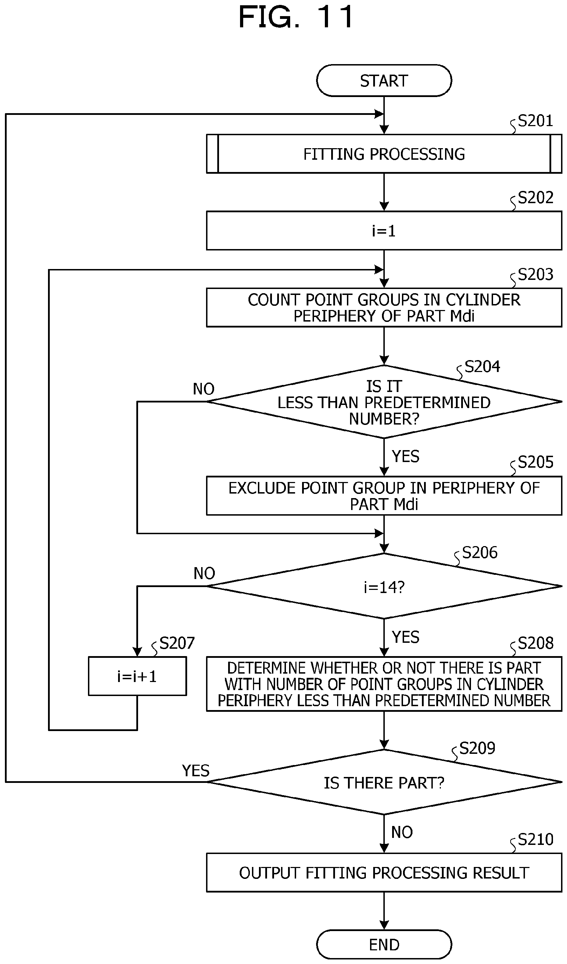

Next, a processing procedure of the noise evaluation process indicated in step S103 in FIG. 10 will be described. FIG. 11 is a flowchart illustrating a processing procedure of the noise evaluation process. As illustrated in FIG. 11, the fitting processing unit 152 of the information processing apparatus 100 executes a fitting process (step S201). Details of the fitting process will be described later.

Next, the fitting processing unit 152 sets 1 to i (step S202). The fitting processing unit 152 counts point groups around a cylinder of a part Mdi (step S203). If the number of point groups is less than a predetermined number (No in step S204), the fitting processing unit 152 proceeds to step S206. Note that the predetermined number is a value set for each of individual cylinders.

If the number of point groups is less than the predetermined number (Yes in step S204), the fitting processing unit 152 proceeds to step S205. The fitting processing unit 152 excludes the point group around the part Mdi (step S205).

If the value of i is 14 (Yes in step S206), the fitting processing unit 152 proceeds to step S208. Note that an exemplary case where the number of parts is 14 is described in the present embodiment. If the value of i is not 14 (No in step S206), the fitting processing unit 152 proceeds to step S207. The fitting processing unit 152 adds 1 to the value of i (step S207), and proceeds to step S203.

The fitting processing unit 152 determines whether or not there is a part in which the number of point groups around the cylinder is less than a predetermined number (step S208). If there is a part (Yes in step S209), the fitting processing unit 152 proceeds to step S201. On the other hand, if there is no part (No in step S209), the fitting processing unit 152 proceeds to step S210. In this manner, the fitting processing unit 152 repeatedly executes the fitting process while updating the three-dimensional point group data to be processed until the influence of noise becomes lower than a certain level for all parts. Specifically, if the number of point groups around the cylinder corresponding to a certain part is less than the predetermined number in the previously executed fitting result, the fitting processing unit 152 determines that the previously executed fitting is affected by noise. For example, it is determined that the previously executed fitting is affected by the noise more than a certain level, and that the fitting needs to be executed again. Then, the fitting processing unit 152 performs the fitting process again on the updated three-dimensional point group data in which a part of the point groups is deleted by the previous noise evaluation process. In this manner, the fitting processing unit 152 determines that the influence of noise on the previous fitting processing result is lower than the certain level when there is no part in which the number of point groups around the cylinder of each part is less than the predetermined number.

The fitting processing unit 152 outputs the result of the fitting process to the generation unit 153 (step S210).

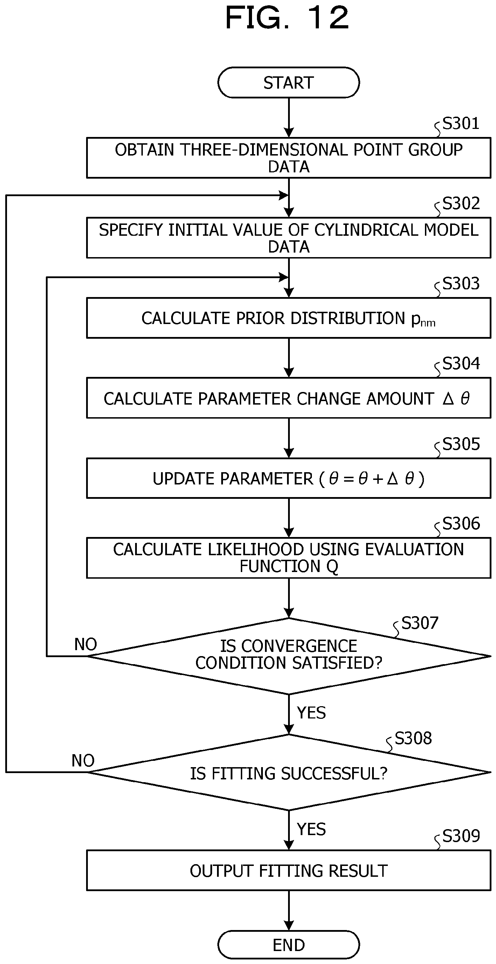

Next, a processing procedure of the fitting process indicated in step S201 in FIG. 11 will be described. FIG. 12 is a flowchart illustrating a processing procedure of the fitting process. As illustrated in FIG. 12, the fitting processing unit 152 of the information processing apparatus 100 obtains three-dimensional point group data (step S301).

The fitting processing unit 152 specifies an initial value of the cylindrical model data 40 (step S302). The fitting processing unit 152 calculates prior distribution $p_{nm}$ (step S303).

The fitting processing unit 152 calculates a parameter change amount $\Delta\theta$ (step S304). The fitting processing unit 152 updates the parameter ($\theta = \theta + \Delta\theta$) (step S305).

The fitting processing unit 152 calculates the likelihood using the evaluation function Q (step S306). If a convergence condition is not satisfied (No in step S307), the fitting processing unit 152 proceeds to step S303. On the other hand, if the convergence condition is satisfied (Yes in step S307), the fitting processing unit 152 proceeds to step S308.

The fitting processing unit 152 determines whether or not the fitting has succeeded (step S308). For example, if the sum of the prior distribution $p_{nm}$ is equal to or greater than a preset threshold value, the fitting processing unit 152 determines that the fitting has succeeded.

If the fitting has not succeeded (No in step S308), the fitting processing unit 152 proceeds to step S302. On the other hand, if the fitting has succeeded (Yes in step S308), the fitting processing unit 152 proceeds to step S309. The fitting processing unit 152 outputs a fitting result (step S309).

Next, effects of the information processing apparatus 100 according to the present embodiment will be described. The information processing apparatus 100 repeatedly executes the fitting process by excluding the point group around the cylinder to be subject to the influence of noise until the influence of noise becomes lower than a certain level, and specifies a posture of the final cylindrical model data 40. Then, the information processing apparatus specifies skeleton model data 6a based on the posture of the final cylindrical model data 40. As a result, it becomes possible to suppress a decrease in accuracy of the skeleton model data derived from the erroneous fitting caused by noise.

For example, in the example described with reference to FIG. 15, noise appears at a constant rate on the opposite direction of the sensor, and the error caused by the noise is approximately 10 cm. Meanwhile, with the information processing apparatus 100 executing the process described above, the noise is removed, and the error caused by the noise is reduced to approximately 1 cm.

The information processing apparatus 100 counts the number of points included in the point group around the cylinder, and repeatedly executes the process of applying the cylindrical model data 40 again until the number of points becomes equal to or more than a predetermined number. As a result, it becomes possible to exclude the noise-derived point group included in the three-dimensional point group data. Furthermore, the cylindrical model data is applied to the three-dimensional point group data from which the noise-derived point group is excluded, whereby it becomes possible to suppress allocation of a part of the cylindrical model data 40 to the noise.

Meanwhile, the process of the information processing apparatus 100 described above is an example, and the information processing apparatus 100 may execute another process. For example, while the fitting processing unit 152 of the information processing apparatus 100 counts the number of point groups (number of points included in point groups) included in the cylinder periphery with the range of the cylinder periphery fixed to the "range from the cylinder surface to r/10" to exclude the point group included in the cylinder periphery in a case where the influence of noise is equal to or higher than a certain level, it is not limited to this.

The fitting processing unit 152 may gradually increase the range of the cylinder periphery. In a case where the fitting processing unit 152 selects a certain part and evaluates the influence of noise on the selected part for the first time, it sets the range of the cylinder periphery to r/10 from the cylinder surface. In a case where the fitting processing unit 152 evaluates the influence of noise for the second time, it sets the range of the cylinder periphery to r/9 from the cylinder surface. In a case where the fitting processing unit 152 evaluates the influence of noise for the third and subsequent times, it sets the range of the cylinder periphery to r/8 from the cylinder periphery.

In this manner, the fitting processing unit 152 gradually increases the range of the cylinder periphery, whereby it becomes possible to gradually increase the number of point groups to be excluded from the three-dimensional point group data.

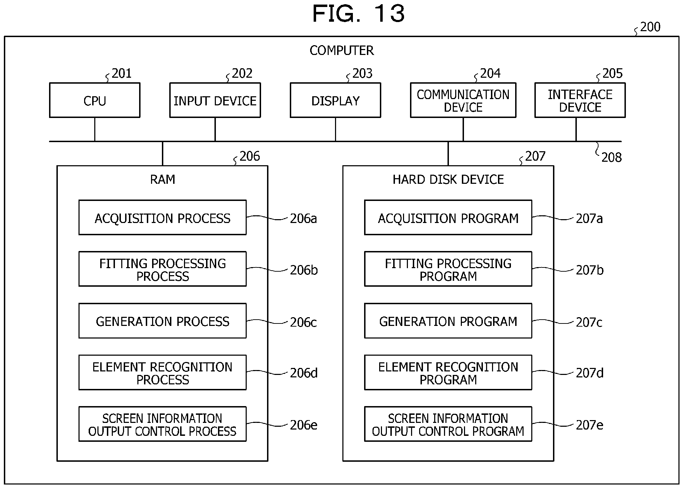

Next, an exemplary hardware configuration of a computer that implements functions similar to those of the information processing apparatus 100 described in the above embodiment will be described. FIG. 13 is a diagram illustrating an exemplary hardware configuration of the computer that implements functions similar to those of the information processing apparatus.

As illustrated in FIG. 13, a computer 200 includes a CPU 201 that executes various types of arithmetic processing, an input device 202 that receives data input from the user, and a display 203. Furthermore, the computer 200 includes a communication device 204 that receives a measurement result from a sensor, and an interface device 205 connected with various devices. The computer 200 includes a RAM 206 that temporarily stores various types of information, and a hard disk device 207. Then, each of the devices 201 to 207 is connected to a bus 208.

The hard disk device 207 includes an acquisition program 207a, a fitting processing program 207b, a generation program 207c, an element recognition program 207d, and a screen information output control program 207e. The CPU 201 reads the acquisition program 207a, the fitting processing program 207b, the generation program 207c, the element recognition program 207d, and the screen information output control program 207e to load them in the RAM 206.

The acquisition program 207a functions as an acquisition process 206a. The fitting processing program 207b functions as a fitting processing process 206b. The generation program 207c functions as a generation process 206c. The element recognition program 207d functions as an element recognition process 206d. The screen information output control program 207e functions as a screen information output control process 206e.

Processing of the acquisition process 206a corresponds to the processing of the acquisition unit 151. Processing of the fitting processing process 206b corresponds to the processing of the fitting processing unit 152. Processing of the generation process 206c corresponds to the processing of the generation unit 153. Processing of the element recognition process 206d corresponds to the processing of the element recognition unit 154. Processing of the screen information output control process 206e corresponds to the processing of the screen information output control unit 155.

Note that the individual programs 207a to 207e may not necessarily be stored in the hard disk device 207 beforehand. For example, each of the programs is stored in a "portable physical medium" such as a flexible disk (FD), a compact disc read only memory (CD-ROM), a digital versatile disc (DVD), a magneto-optical disk, or an integrated circuit (IC) card to be inserted in the computer 200. Then, the computer 200 may read and execute each of the programs 207a to 207e.

CITATION LIST

PATENT DOCUMENT

Patent Document 1: International Publication Pamphlet No. WO 2018/207292

NON-PATENT DOCUMENT

Non-Patent Document 1: M. Ye and R. Yang, "Real-time Simultaneous Pose and Shape Estimation for Articulated Objects Using a Single Depth Camera" in CVPR (2014)

REFERENCE SIGNS LIST

    10sensor

    40cylindrical model data

    100information processing apparatus

    110communication unit

    120input unit

    130display unit

    140storage unit

    141distance image table

    142skeleton model table

151 acquisition unit

152 fitting processing unit

153 generation unit

154 element recognition unit

155 screen information output control unit

**Claims**

1.  A generation method implemented by a computer, the generation method comprising:

    obtaining three-dimensional (3D) point group data on the basis of a measurement result of a 3D sensor that three-dimensionally measures a subject;
    evaluating an influence of noise on the measurement result on the basis of a result obtained by applying a cylinder model that expresses individual parts of a human body with a plurality of cylinders to the 3D point group data for each of the parts;
    repeatedly executing a process in which a point group in a cylinder model periphery that corresponds to a part in which the influence of noise is determined to be equal to or higher than a predetermined level is excluded from the 3D point group data and the cylinder model is applied again to the three-dimensional point group data from which the point group is excluded;
    generating a skeleton recognition result of the subject on the basis of a result obtained by applying the cylinder model to the 3D point group data of a case where the influence of noise on each of the parts is lower than the predetermined level; and
    outputting the skeleton recognition result.

2.  The generation method according to claim 1, wherein the evaluating of the influence of noise is configured to count, for each of the parts, a number of points included in the point group in the cylinder model periphery applied to the 3D point group data, and
    the repeatedly executing of the process is performed until the number of points becomes equal to or more than a predetermined number set for each of the parts.

3.  The generation method according to claim 1 or 2, wherein the evaluating of the influence of noise is configured to increase a range that corresponds to the cylinder model periphery each time the cylinder model is applied again to the 3D point group data.

4.  A generation program comprising instructions which, when the instructions are executed by a computer, cause the computer to execute processing comprising:

    obtaining three-dimensional (3D) point group data on the basis of a measurement result of a 3D sensor that three-dimensionally measures a subject;
    evaluating an influence of noise on the measurement result on the basis of a result obtained by applying a cylinder model that expresses individual parts of a human body with a plurality of cylinders to the 3D point group data for each of the parts;
    repeatedly executing a process in which a point group in a cylinder model periphery that corresponds to a part in which the influence of noise is determined to be equal to or higher than a predetermined level is excluded from the 3D point group data and the cylinder model is applied again to the 3D point group data from which the point group is excluded;
    generating a skeleton recognition result of the subject on the basis of a result obtained by applying the cylinder model to the 3D point group data of a case where the influence of noise on each of the parts is lower than the predetermined level; and
    outputting the skeleton recognition result.

5.  The generation program according to claim 4, wherein the evaluating of the influence of noise is configured to count, for each of the parts, a number of points included in the point group in the cylinder model periphery applied to the 3D point group data, and
the repeatedly executing of the process is performed until the number of points becomes equal to or more than a predetermined number set for each of the parts.

6. The generation program according to claim 4 or 5, wherein the evaluating of the influence of noise is configured to increase a range that corresponds to the cylinder model periphery each time the cylinder model is applied again to the 3D point group data.

7. An information processing system comprising:

a three-dimensional (3D) sensor that three-dimensionally measures a subject; and
an information processing device,
wherein the 3D sensor outputs, to the information processing device, a measurement result obtained by performing a three-dimensionally measurement of the subject, and
the information processing device includes
an acquisition unit that obtains 3D point group data on the basis of the measurement result from the 3D sensor;
a fitting processing unit that performs

evaluating an influence of noise on the measurement result on the basis of a result obtained by applying a cylinder model that expresses individual parts of a human body with a plurality of cylinders to the 3D point group data for each of the parts, and
repeatedly executing a process in which a point group in a cylinder model periphery that corresponds to a part in which the influence of noise is determined to be equal to or higher than a predetermined level is excluded from the 3D point group data and the cylinder model is applied again to the 3D point group data from which the point group is excluded; and

a generation unit that performs

generating a skeleton recognition result of the subject on the basis of a result obtained by applying the cylinder model to the 3D point group data of a case where the influence of noise on each of the parts is lower than the predetermined level, and
outputting the skeleton recognition result.

8. The information processing system according to claim 7, wherein the fitting unit performs

counting, for each of the parts, a number of points included in the point group in the cylinder model periphery applied to the 3D point group data, and
performing the repeatedly executing of the process in which the cylinder model is applied again, until the number of points becomes equal to or more than a predetermined number set for each of the parts.

9. The information processing system according to claim 7 or 8, wherein the fitting unit increases a range that corresponds to the cylinder model periphery each time the cylinder model is applied again to the 3D point group data.

FIG. 1

FITTING PROCESS

REPETITION OF NOISE INFLUENCE EVALUATION AND FITTING PROCESS

# FIG. 2

# FIG. 3

# FIG. 4

40

| PART IDENTIFICATION INFORMATION | PARAMETER (LENGTH, RADIUS) |
|---|---|
| Md1 | PARAMETER OF Md1 |
| Md2 | PARAMETER OF Md2 |
| Md3 | PARAMETER OF Md3 |
| Md4 | PARAMETER OF Md4 |
| Md5 | PARAMETER OF Md5 |
| Md6 | PARAMETER OF Md6 |
| Md7 | PARAMETER OF Md7 |
| Md8 | PARAMETER OF Md8 |
| Md9 | PARAMETER OF Md9 |
| Md10 | PARAMETER OF Md10 |
| Md11 | PARAMETER OF Md11 |
| Md12 | PARAMETER OF Md12 |
| Md13 | PARAMETER OF Md13 |
| Md14 | PARAMETER OF Md14 |

# FIG. 5

# FIG. 6

# FIG. 7

A13 Md13     Md13

## FIG. 8

(S10)                    (S11)                    (S12)

# FIG. 9

# FIG. 10

START

S101

OBTAIN DISTANCE IMAGE DATA FROM SENSOR
AND STORE IT IN DISTANCE IMAGE TABLE

S102

PERFORM CONVERSION INTO
THREE-DIMENSIONAL POINT GROUP DATA

S103

NOISE EVALUATION PROCESS

S104

GENERATE SKELETON MODEL DATA BASED ON
FITTING PROCESSING RESULT AND STORE IT IN
SKELETON MODEL TABLE

S105

IS PERFORMANCE COMPLETE?

NO

YES

S106

EXECUTE ELEMENT RECOGNITION AND SPECIFY
ELEMENT TYPE AND PERFORMANCE SCORE

S107

GENERATE SCREEN INFORMATION

S108

DISPLAY SCREEN INFORMATION

END

# FIG. 11

START

S201
FITTING PROCESSING

S202
i=1

S203
COUNT POINT GROUPS IN CYLINDER
PERIPHERY OF PART Mdi

S204
IS IT
LESS THAN PREDETERMINED
NUMBER?

NO

YES

S205
EXCLUDE POINT GROUP IN PERIPHERY OF
PART Mdi

S206
i=14?

NO

YES

S207
i=i+1

S208
DETERMINE WHETHER OR NOT THERE IS PART
WITH NUMBER OF POINT GROUPS IN CYLINDER
PERIPHERY LESS THAN PREDETERMINED NUMBER

S209
IS THERE PART?

YES

NO

S210
OUTPUT FITTING PROCESSING RESULT

END

# FIG. 12

START

$\downarrow$

S301

OBTAIN THREE-DIMENSIONAL POINT GROUP DATA

$\downarrow$

S302

SPECIFY INITIAL VALUE OF CYLINDRICAL MODEL DATA

$\downarrow$

S303

CALCULATE PRIOR DISTRIBUTION $p_{nm}$

$\downarrow$

S304

CALCULATE PARAMETER CHANGE AMOUNT $\Delta\theta$

$\downarrow$

S305

UPDATE PARAMETER ($\theta = \theta + \Delta\theta$)

$\downarrow$

S306

CALCULATE LIKELIHOOD USING EVALUATION FUNCTION Q

$\downarrow$

S307

IS CONVERGENCE CONDITION SATISFIED?

NO

YES

$\downarrow$

S308

IS FITTING SUCCESSFUL?

NO

YES

$\downarrow$

S309

OUTPUT FITTING RESULT

$\downarrow$

END

# FIG. 13

COMPUTER 200

| CPU 201 | INPUT DEVICE 202 | DISPLAY 203 | COMMUNICATION DEVICE 204 | INTERFACE DEVICE 205 |

208

**RAM 206**

- ACQUISITION PROCESS — 206a
- FITTING PROCESSING PROCESS — 206b
- GENERATION PROCESS — 206c
- ELEMENT RECOGNITION PROCESS — 206d
- SCREEN INFORMATION OUTPUT CONTROL PROCESS — 206e

**HARD DISK DEVICE 207**

- ACQUISITION PROGRAM — 207a
- FITTING PROCESSING PROGRAM — 207b
- GENERATION PROGRAM — 207c
- ELEMENT RECOGNITION PROGRAM — 207d
- SCREEN INFORMATION OUTPUT CONTROL PROGRAM — 207e

FIG. 14

# FIG. 15

<table>
<tr><td colspan="2" align="center">**INTERNATIONAL SEARCH REPORT**</td><td colspan="2">International application No.<br>PCT/JP2019/048515</td></tr>
</table>

**A. CLASSIFICATION OF SUBJECT MATTER**
G06T 7/00(2017.01)i
FI: G06T7/00 660B
According to International Patent Classification (IPC) or to both national classification and IPC

**B. FIELDS SEARCHED**

Minimum documentation searched (classification system followed by classification symbols)
G06T7/00-7/90, G01B11/00-11/30

| Documentation searched other than minimum documentation to the extent that such documents are included in the fields searched | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/030794 A1 (FUJITSU LTD.) 14.02.2019 (2019-02-14) paragraphs [0030], [0035] | 1-9 |
| A | JP 2015-102913 A (CANON INC.) 04.06.2015 (2015-06-04) paragraphs [0035]-[0039] | 1-9 |

☐ Further documents are listed in the continuation of Box C. ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>20 January 2020 (20.01.2020) | Date of mailing of the international search report<br>28 January 2020 (28.01.2020) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.

PCT/JP2019/048515

| Patent Documents referred in the Report | Publication Date | Patent Family | Publication Date |
|---|---|---|---|
| WO 2019/030794 A1 | 14 Feb. 2019 | (Family: none) | |
| JP 2015-102913 A | 04 Jun. 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018207292 A

**Non-patent literature cited in the description**

- **M. YE ; R. YANG.** Real-time Simultaneous Pose and Shape Estimation for Articulated Objects Using a Single Depth Camera. *CVPR,* 2014